# EUROPEAN PATENT APPLICATION

(11) **EP 1 571 598 A1**
(43) Date of publication of application: **07.09.2005**
(21) Application number: 05075492.8
(22) Date of filing: 28.02.2005
(51) Int. Cl.: G07C 5/00, G01S 5/14

(54) **Hand held wireless remote control device for indicating direction and distance to a vehicle**

(30) Priority: 03.03.2004 US 792419
(71) Applicant: Delphi Technologies, Inc., Troy, MI 48007 (US)
(72) Inventor: Davis, Alan C., Fenton, MI 48430 (US); Dybalski, Ronald H., Oxford, MI 48371 (US); Riefe, Richard K., Saginaw, MI 48609 (US); Nash, Richard P., Frankenmuth, MI 48734 (US); Berg, Frederick J., Auburn, MI 48611 (US)
(74) Representative: Denton, Michael John

(57) **Abstract**

A communication system **(10)** includes a remote device **(20)** for communicating with a vehicle **(12)**. Both the vehicle **(12)** and the remote device **(20)** have global positioning system (GPS) receivers **(14)** for determining the location of the vehicle **(12)** and remote device **(20)** respectively. The remote device **(20)** computes the direction, distance, and elevation difference between the remote device **(20)** and the vehicle **(12)**. The remote device also includes a digital compass **(52)** for determining the direction the remote device **(20)** is pointed. A display **(36)** on the remote device **(20)** shows an arrow **(44)**, along with the distance and elevation difference, to guide a user **(46)** to the vehicle **(12)**. The remote device **(20)** can also send control commands to vehicle systems and receive status data from vehicle systems.

## Description

### TECHNICAL FIELD

The subject invention relates generally to a communication system for a vehicle and specifically to a remote device for communication with the vehicle.

### BACKGROUND OF THE INVENTION

Various systems and devices for communicating with a vehicle are well known in the prior art. An example of such a system is disclosed in United States Patent Application Publication 2003/0139179 (the '179 publication).

The '179 publication discloses a system for communicating with a vehicle with a remote device. The remote device can utilize a wide area network, such as a cellular telephone network or TCP/IP, and a local area network, such as Bluetooth or 802.11. The remote device can include human interface elements, such as a display, one or more control buttons or knobs, a speaker, and a microphone. A user of the remote device can access, control, operate, and check the status of at least one vehicle system. The vehicle and the remote device each include a position system to determine the position of the vehicle and the remote device respectively. The remote device calculates the relative position of the vehicle to the remote device.

The known communication system above does not, however, provide a remote device operative to indicate direction, distance, and elevation difference to the vehicle from the remote device on an updating basis to guide a user to the vehicle. Moreover, the above remote device is not equipped with a digital compass or other directional display, to show an arrow on a display to indicate direction to the vehicle from the remote device.

### BRIEF SUMMARY OF THE INVENTION AND ADVANTAGES

The subject invention provides a remote device for communicating with a vehicle. The vehicle is equipped with a vehicle global positioning system (GPS) receiver for determining location coordinates of the vehicle and a vehicle wireless interface for transmitting the location coordinates of the vehicle. The remote device includes a remote device wireless interface for receiving the location coordinates of the vehicle. The remote device also includes a remote device GPS receiver for determining location coordinates of the remote device. A processor is operatively connected to the remote device wireless interface and the remote device GPS receiver to calculate the relative position of the remote device to the vehicle. The remote device is characterized by an output apparatus operatively connected to the processor for indicating direction, distance, and elevation difference to the vehicle from the remote device.

Accordingly, the remote device of the subject invention allows a user to find the vehicle quickly and easily.

### BRIEF DESCRIPTION OF THE DRAWINGS

Other advantages of the present invention will be readily appreciated as the same becomes better understood by reference to the following detailed description when considered in connection with the accompanying drawings wherein:
Figure 1 illustrates a user utilizing a remote device with a communication system to locate a vehicle;
Figure 2 is a block diagram of a preferred embodiment of the communication system showing the remote device and the vehicle;
Figure 3a is a front view of the preferred embodiment of the remote device;
Figure 3b is a front view of a first alternative embodiment of the remote device; and
Figure 3c is a front view of a second alternative embodiment of the remote device.

### DETAILED DESCRIPTION OF THE INVENTION

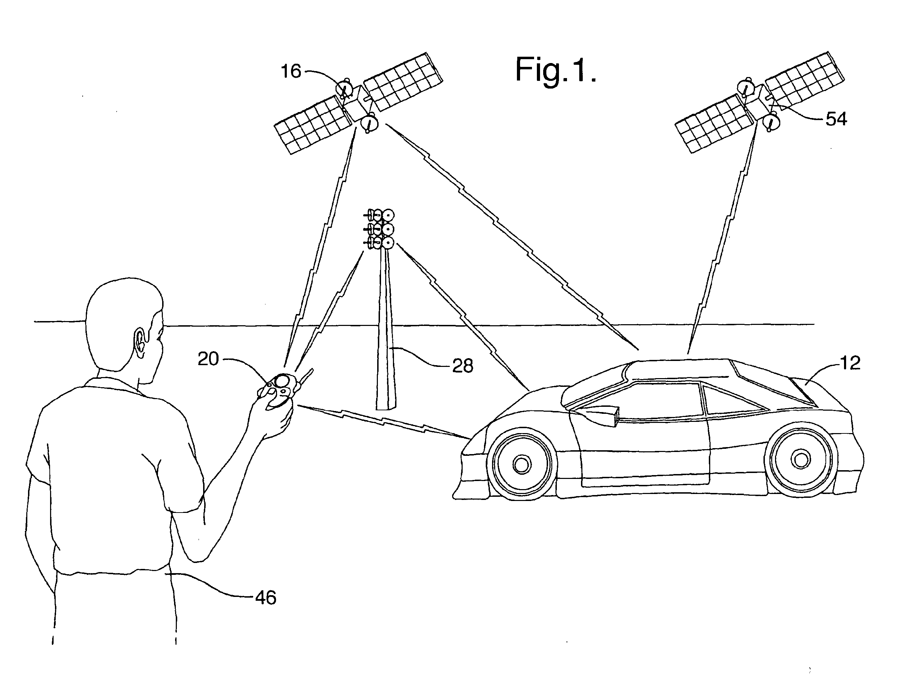

Referring to the Figures, wherein like numerals indicate like or corresponding parts throughout the several views, a communications system is shown at **10** in Figure 1. The communications system **10** includes a vehicle **12** and a remote device **20.**

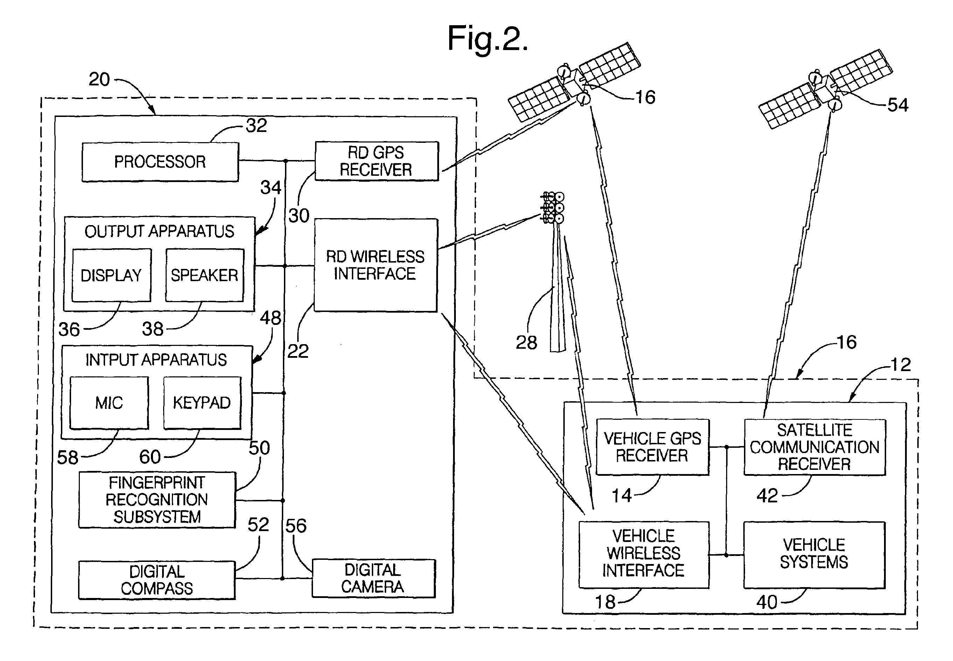

Referring now to Figure 2, showing a preferred embodiment of the communications system **10**, the vehicle **12** is equipped with a vehicle wireless interface **18**. The vehicle wireless interface **18** is capable of communicating with the remote device **20** via a cellular telephone network **28**. Examples of protocols used by the cellular telephone network **28** include, but are not limited to, Code Division Multiple Access (CDMA), Time Division Multiple Access (TDMA), and Global System for Mobile Communications (GSM).

The vehicle wireless interface **18** is also capable of communicating directly with the remote device **20**. Preferably, this communication is performed utilizing the Bluetooth® protocol as established by the Bluetooth® Special Interest Group headquartered in Overland Park, Kansas and located on the internet at http://www.bluetooth.org. However, other protocols, systems, and the like may be used to establish communications directly between the vehicle wireless interface **18** and the remote device **20**.

The vehicle **12** is equipped with a vehicle global positioning system (GPS) receiver **14**. The vehicle GPS receiver **14** determines location coordinates of the vehicle **12** based on signals received from GPS satellites **16** orbiting the Earth. The vehicle **12** also includes a satellite communication receiver **42.** The satellite communication receiver **42** is able to receive data from service satellites **54,** such as those utilized by the OnStar® Corporation of Troy, Michigan. Those skilled in the art recognize that the satellite communication receiver **42** can also receive data from satellites **54** from a variety of service providers. The vehicle GPS receiver **14** and the satellite communication receiver **42** are operatively connected to the vehicle wireless interface **18**.

The vehicle wireless interface **18** is also operatively connected to at least one vehicle system **40**. Examples of vehicle systems **40**, include, but are not limited to the ignition/starter, door locks, trunk latch, engine controller, radio, instrument cluster, climate controls, and security.

The vehicle wireless interface **18** transmits information about the vehicle **12**. This information includes the location coordinates of the vehicle **12.** The vehicle wireless interface **18** also transmits data from the at least one vehicle system **40** or the satellite communication receiver **42**. Additionally, the vehicle wireless interface **18** can receive data from the remote device **20**, such as commands to start the vehicle's **12** engine, turn up the volume on the radio, open the door locks, engage the security system, etc.

Still referring to Figure 2, the remote device **20** includes a remote device wireless interface **22**. The remote device wireless interface **22** transmits and receives data to and from the vehicle **12** via the vehicle wireless interface **18**. The remote device wireless interface **22** is capable of communicating with the cellular telephone network **28**. As state above, examples of protocols used by the cellular telephone network **28** include, but are not limited to, Code Division Multiple Access (CDMA), Time Division Multiple Access (TDMA), and Global System for Mobile Communications (GSM).

The remote device wireless interface **22** is also capable of communicating directly with the vehicle wireless interface **18.** Again, this communication is preferably performed utilizing the Bluetooth® protocol. However, other protocols, systems, and the like may be used to establish communications directly between the remote device wireless interface **22** and the vehicle wireless interface **18**.

Data received by the remote device wireless interface **22** from the vehicle **12** includes, but is not limited to, status of the vehicle systems **40**, information from the satellite communication receiver **42**, and the location coordinates of the vehicle **12**.

The remote device **20** also includes a remote device GPS receiver **30** and a digital compass **52**. The remote device GPS receiver **30** determines location coordinates of the remote device **20** based on signals received from the GPS satellites **16**. The digital compass **52** senses the direction that the remote device **20** is pointing towards based on the magnetic field of the Earth.

The remote device **20** further includes a processor **32**. The processor **32** is operatively connected to the remote device wireless interface **22**, the remote device GPS receiver **30**, and the digital compass **52**. The position of the vehicle **12,** in relation to the position of the remote device **20**, is calculated by the processor **32.**

An output apparatus **34**, operatively connected to the processor **32**, is also included with the remote device **20**. The output apparatus **34**, among other functions, indicates direction, distance, and elevation difference to the vehicle **12** from the remote device **20**. In the preferred embodiment, the output apparatus **34** includes a display **36** to graphically show direction, distance, and elevation difference to the vehicle 12 from the remote device 20. An arrow 44, shown on the display **36,** indicates direction to the vehicle **12.** The user **46,** by holding the remote communicator in their hand and viewing the display **36,** can follow the arrow **44** to easily find his or her vehicle **12.** This is very useful, especially when looking for your vehicle at busy parking lots, such as shopping malls, entertainment arenas, airports, etc. The elevation difference measurement is especially beneficial when searching for the vehicle in a multilayer parking structure. In the preferred embodiment, the output apparatus also includes a speaker **38.** The remote device **20** can also audibly communicate direction, distance, and elevation difference to the vehicle **12** via the speaker **38.**

The output apparatus **34** of the remote device **20** also indicates status data from one or more vehicle systems **40** of the vehicle **12.** In the preferred embodiment, the status data can be presented on the display 36 or through the speaker **38.** The status data includes, but is not limited to: engine running status, alarm system status, climate control settings, current speed of vehicle, frequency radio is tuned to, and so forth.

The remote device **20** also includes an input apparatus **48.** The input apparatus **48** is operatively connected to the processor **32.** In the preferred embodiment, the input apparatus **48** comprises a keypad **60** and a microphone **58.** However, other embodiments may utilize pushbuttons, a control knob, a touchscreen panel, etc., as elements of the input apparatus **48.** The input apparatus **48** allows the user **46** to input data or commands into the remote device **20** to control one or more systems **40** of the vehicle **12.** These command and data are transmitted to the vehicle **12** via the remote device wireless interface **22** and the vehicle wireless interface **18.** For instance, on a cold winter day, the user **46** could use the remote device **20** to warm-up the vehicle **12** by turning on the engine and setting the climate controls. Or, the user **46** could change radio stations or adjust volume of the radio while outside of the vehicle **20.** The remote control operations possible with the subject invention are seemingly endless.

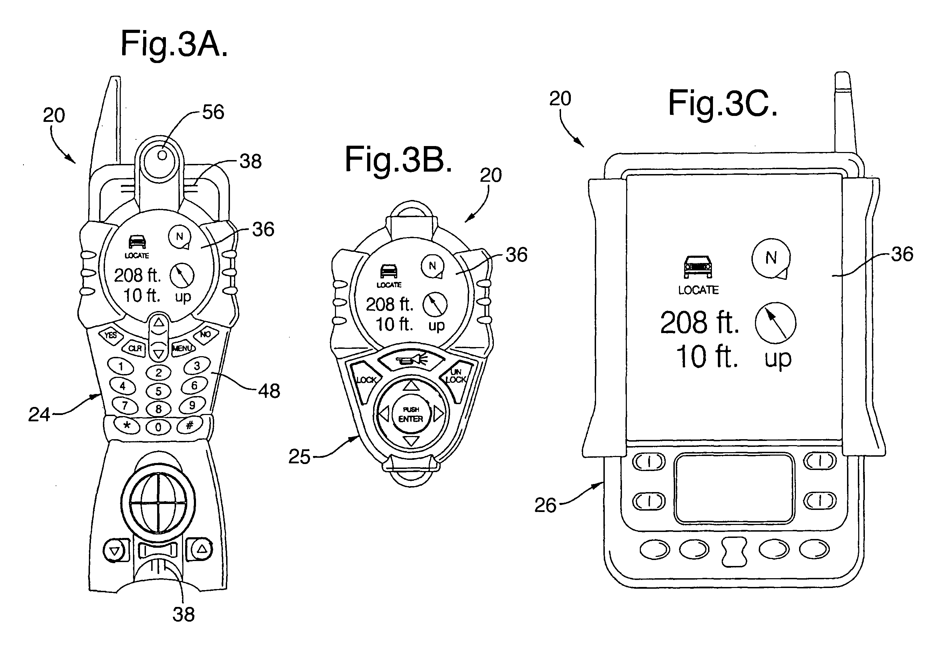

In the preferred embodiment, the remote device **20** further includes a fingerprint recognition subsystem **50.** The fingerprint recognition subsystem **50** is operatively connected to the processor **32** and includes a fingerprint sensor **51.** (The fingerprint sensor **51** is shown in Figure 3a.) The user **46** places his or her finger on the fingerprint sensor **51.** The user's **46** fingerprint is scanned into an image. The image is compared to other images stored in the subsystem **50** to verify the identity of the user **46.** The remote device **20** can be configured to prevent all usage of the remote device **20** unless the user **46** is verified by subsystem **50.** Alternatively, certain functions of the vehicle **12,** such as engine starting or door unlocking, can be blocked if the user **46** is not verified.

An additional feature of the preferred embodiment of the remote device **20** is an integrated digital camera **56.** The user **46** is able to capture images and send the images to the vehicle **12** or other users of the cellular telephone network **28.**

In the preferred embodiment, the remote device **20** is realized as a cellular telephone **24,** as shown in Figure 3a. As outlined above, the output apparatus **34** of the cellular telephone **24** includes a display **36** and a speaker **38.** The input apparatus **48** includes a microphone **58** and a keypad **60.**

In a first alternative embodiment, as shown in Figure 3b, the remote device is realized as a key fob **25,** with pushbuttons to lock and unlock the doorlocks of the vehicle **12.** In a second alternative embodiment, referring to Figure 3c the remote device 20 is realized as a personal digital assistant (PDA) **26.** PDAs are capable of storing and processing data, typically including names, addresses, phone numbers, meetings, appointments, etc. It is understood by those skilled in the art that additional embodiments are possible utilizing a wide variety of devices.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A remote device **(20)** for communicating with a vehicle **(12)** equipped with a vehicle global positioning system (GPS) receiver **(14)** for determining location coordinates of the vehicle **(12)** and a vehicle wireless interface **(18)** for transmitting the location coordinates of the vehicle **(12),** said remote device **(20)** comprising:
a remote device wireless interface **(22)** for receiving the location coordinates of the vehicle **(12);**
a remote device GPS receiver **(30)** for determining location coordinates of said remote device **(20);**
a processor **(32)** operatively connected to said remote device wireless interface **(22)** and said remote device GPS receiver **(30)** for calculating the relative position of said remote device **(20)** to the vehicle **(12);**
said remote device **(20) characterized by** an output apparatus **(34)** operatively connected to said processor **(32)** for indicating direction, distance, and elevation difference to the vehicle **(12)** from said remote device **(20).**

2. A remote device **(20)** as set forth in claim 1 wherein said output apparatus **(34)** is a display **(36)** for graphically displaying direction, distance, and elevation difference to the vehicle **(12)** from said remote device **(20).**

3. A remote device **(20)** as set forth in claim 2 further comprising a digital compass **(52)** for determining the direction said remote device **(20)** is pointed towards.

4. A remote device **(20)** as set forth in claim 3 wherein said display **(36)** shows an arrow **(44)** to indicate direction to the vehicle **(12).**

5. A remote device **(20)** as set forth in claim 1 wherein said output apparatus **(34)** is a speaker **(38)** for audibly communicating direction, distance, and elevation difference to the vehicle **(12)** from said remote device **(20).**

6. A remote device **(20)** as set forth in claim 1 further comprising an input apparatus **(48)** operatively connected to said processor **(32)** for inputting data or commands into said remote device **(20)** for controlling at least one system **(40)** of the vehicle **(12).**

7. A remote device **(20)** as set forth in claim 1 wherein said output apparatus **(34)** indicates status data from one or more systems **(40)** of the vehicle **(12).**

8. A remote device **(20)** as set forth in claim 1 further comprising a fingerprint recognition subsystem **(50)** operatively connected to said processor **(32)** for verifying the identity of a user **(46)** of said remote device **(20).**

9. A remote device **(20)** as set forth in claim 1 further comprising a digital compass **(52)** for indicating direction.

10. A remote device **(20)** as set forth in claim 1 further comprising a digital camera **(56)** for recording images.

11. A remote device **(20)** as set forth in claim 1 wherein said remote device **(20)** is a cellular telephone **(24)** further comprising:
a microphone **(58)** operatively connected to said processor **(32)** for receiving audible signals;
a speaker **(38)** operatively connected to said processor **(32)** for conveying audible signals;
a keypad **(60)** operatively connected to said processor **(32)** for entering phone numbers and other data into said device;
wherein said remote device wireless interface **(22)** communicates with a cellular telephone network **(28).**

12. A remote device **(20)** as set forth in claim 1 wherein said remote device **(20)** is a personal digital assistant (PDA) **(26)** for storing and organizing data.

13. A remote device **(20)** as set forth in claim 1 wherein said remote device (20) is a key fob **(25)** for controlling door locks of the vehicle **(12).**

14. A communications system **(10)** comprising:
a vehicle **(12)** including:
a vehicle global positioning system (GPS) receiver **(14)** for determining location coordinates of said vehicle **(12);** and
a vehicle wireless interface **(18)** for transmitting said location coordinates of said vehicle **(12);** and
a remote device **(20)** including:
a remote device wireless interface **(22)** for receiving said location coordinates of said vehicle **(12)** from said vehicle wireless interface **(18);** a remote device GPS receiver **(30)** for determining location coordinates of said remote device **(20);**
a processor **(32)** operatively connected to said remote device wireless interface **(22)** and said remote device GPS receiver **(30)** for calculating a relative position of said remote device **(20)** to said vehicle **(12);** and an output apparatus **(34)** operatively connected to said processor **(32)** for indicating direction, distance, and elevation difference to said vehicle **(12)** from said remote device **(20).**

15. A communications system **(10)** as set forth in claim 14 wherein said output apparatus **(34)** is a display **(36)** for graphically displaying direction, distance, and elevation difference to said vehicle **(12)** from said remote device **(20).**

16. A communication system **(10)** as set forth in claim 15, wherein said remote device **(20)** further comprises a digital compass **(52)** for determining the direction said remote device **(20)** is pointed towards.

17. A communications system **(10)** as set forth in claim 16 wherein said display **(36)** shows an arrow **(44)** to indicate direction to said vehicle **(12).**

18. A communications system **(10)** as set forth in claim 14 wherein said output apparatus **(34)** is a speaker **(38)** for audibly communicating direction, distance, and elevation difference to said vehicle **(12)** from said remote device **(20).**

19. A communications system **(10)** as set forth in claim 14 wherein said vehicle wireless interface **(18)** is operatively connected to at least one system **(40)** of said vehicle **(12)** for sending commands to said at least one system **(40)** and receiving data from said at least one system **(40).**

20. A communications system **(10)** as set forth in claim 19 wherein said remote device **(20)** further includes an input apparatus **(48)** operatively connected to said processor **(32)** for inputting data or commands into said remote device **(20)** for controlling said at least one system of said vehicle **(12).**

21. A communications system **(10)** as set forth in claim 19 wherein said output apparatus **(34)** indicates status data from one or more systems **(40)** of said vehicle **(12).**

22. A communication system **(10)** as set forth in claim 14 wherein said remote device **(20)** further comprises a fingerprint recognition subsystem **(50)** operatively connected to said processor **(32)** for verifying the identity of a user **(46)** of said remote device **(20).**

23. A communication system **(10)** as set forth in claim 14 wherein said remote device **(20)** further comprising a digital compass **(52)** for indicating direction.

24. A communication system **(10)** as set forth in claim 14 wherein said remote device **(20)** further comprises a digital camera **(56)** for recording images.

25. A communication system **(10)** as set forth in claim 14 wherein said remote device **(20)** is a cellular telephone **(24)** further comprising:
a microphone **(58)** operatively connected to said processor **(32)** for receiving audible signals;
a speaker **(38)** operatively connected to said processor **(32)** for conveying audible signals;
a keypad **(60)** operatively connected to said processor **(32)** for entering phone numbers or other data into said remote device **(20);**
wherein said remote device wireless interface **(22)** communicates with a cellular telephone network **(28).**

26. A communication system **(10)** as set forth in claim 14 wherein said remote device **(20)** is a personal digital assistant (PDA) **(26)** for storing and organizing data.

27. A communication system **(10)** as set forth in claim 14 wherein said remote device **(20)** is a key fob **(25)** for controlling door locks of the vehicle **(12).**
